# EUROPEAN PATENT APPLICATION

(11) **EP 3 182 278 A1**
(43) Date of publication of application: **21.06.2017**
(21) Application number: 15460111.6
(22) Date of filing: 17.12.2015
(51) Int. Cl.: G06F 9/445, G06F 9/455, G06F 11/14

(54) **SYSTEM FOR AUTOMATIC PREPARATION OF INTEGRATED DEVELOPMENT ENVIRONMENTS**

(71) Applicant: Vsoft Spolka Akcyjna, 30-644 Krakow (PL)
(72) Inventor: Roszak, Mariusz, 41-100 Siemianowice Slaskie (PL); Martyna, Andrzej, 30-349 Kraków (PL)
(74) Representative: Karczmitowicz, Teresa Ewa

(57) **Abstract**

A system for automatic preparation of the integrated development environment IDE (202) comprises a virtual machine VM (204a) which together with an operating system OS (601) makes a virtual machine template VMT (203), an installed version VerA of the application (201), and optional dependent applications DepA (602). VM, VMT and the files comprised in VerA available to the user are stored on a deduplication array DA (103). The deduplication array DA consists of two or more hard disks, co-operating in accordance with the RAID mechanism. IDE is executed by a virtualization module VIMO (104), an application version repository module VARMO (105), and an installers creation module ICMO (106) which are installed on the servers S (107) and communicate with each other and DA via the computer network, preferably internal network INTRANET. The process of preparation of IDE is initiated by the user through an installation and updating module IUMO (101), installed on the user's local station LS.

## Description

The object of the invention is a system for automatic preparation of the integrated development environments, used for creation, testing, and presentation of user-selected versions of an application, or specific software. The invention is applicable in particular in companies involved in software development.

Proposed to date solutions of the integrated development environments are focused on access to data and software tools, rather than on efficiency of current work. However, the latter aspect of work in software development companies becomes crucial because of increasing demand for both multi-purpose and specialized applications.

American patent application US2002066071 A1 (Tien S. et al., US, 30.05.2002) discloses an integrated program development environment (IDE) for carrying out concurrent program development tasks on a local station for programs executable on a multiple-tier networked client-server system with multiple tiers of client-server stations. The development environment includes a development-environment emulator for emulating program execution environments in each of the multiple tiers of networked client-server stations. The integrated program development environment further includes a communication emulator for emulating networked communications carried out between the multiple tiers of networked stations performed in executing the programs executable on the multiple tiers of networked client-server system. The development-environment emulator further includes a tier-to-tier data-file compatibility handler for processing data-files generated from each of the multiple-tier of networked stations to carry out compatible data-file transmissions and receptions with another one of the multiple tiers of networked stations.

Another American patent application US2015227439 A1 (Xing J. et al., US, 13.08.2015) describes a method of creating a copy of a backup virtual machine on a deduplicated data storage device, registering the copy with a virtual environment manager, operating a virtual machine based on the copy and storing changes made during operation of the virtual machine to the copy. In a method to protect data a snapshot of a virtual machine is taken, the virtual machine is parsed to determine a header section and a file system, then the virtual machine is indexed based on the parsing, the index is stored in a storage device, and the snapshot is stored in a deduplicated data storage device.

Also international patent application WO2014055449 A1 (Ram T., US, 10.04.2014) proposes solutions for making backups but with use of deduplication algorithms.

Deduplication is proposed inter alia in American patent application US2015331757 A1 (Durge S. et al., IN, US, 19.11.2015), where a computer-implemented method includes the step of accessing a set of data blocks in a local application server disk in an application server. It is determined which of the set of data blocks are used to store data. The data blocks used to store data are read to a deduplication store on the storage appliance. It is determined that a modification occurs to a data block in the local application server disk of the application server. The modification is read to the deduplication store. A remote virtual image of the application server can be generated from the deduplication store.

International patent application WO2012110567 A1 (Brinkmann A., Meister D., DE, 23.08.2012) discloses a method for deduplicating data stored on a storage medium, comprising the following steps: a) in the event of a request to store a data block on the storage medium, a check is carried out to determine whether a data block having identical content is already stored on the storage medium, b) if the check carried out in step "a" is positive, the data block to be stored is not stored anew, but rather a reference to the already stored data block having identical content is stored on the storage medium, c) alternatively, if the check carried out in step "a" is negative, the storage block to be stored is stored on the storage medium, d) before the check to determine if a data block having identical content is already stored on the storage medium, a check is carried out to determine whether the data block to be stored completely or mainly comprises metadata, and e) if the data block to be stored completely or mainly comprises metadata, said data block is stored on the storage medium without carrying out the check "a".

Although dedicated to distributed networks like Internet, based on deduplication solutions proposed in international patent application WO2012138521 A1 (McGhee D. et al., US, 11.10.2012) can be applied to local and internal networks, especially where the amount of traffic on the network is very high. Systems and methods are disclosed for in-line removal of duplicate network packets in network packet streams operating at high speeds. A hash generator applies at least one hash algorithm to incoming packets to form one or more different hash values. The packet deduplication systems and methods then use the one or more hash values for each incoming packet to identify data stored for previously received backs and use the identified data to determine if incoming packets are duplicate packets. Duplicate packets are then removed from the output packet stream thereby reducing duplicate packets for downstream processing. A deduplication window can further be utilized to limit the amount of data stored for previous packets based upon one or more parameters, such as an amount of time that has passed and/or a number of packets for which data has been stored.

American patent application US2011083122 A1 (Chen J. et al., US, 07.04.2011) discloses an automated system to support massive scale grid of machines in a rapid, multi-developer coding environment. The system has virtual testing environments that are created from template machines, supporting various software versions for various code branches. The grid is built by having a small subset of template machines with application server installations, images of the template machines, virtual machine instances created by applying one or more of the image templates, which then are used by the virtual testing environment. Upon receipt of code changes, changes are checked-out, compiled, tested on various test feeds on a virtual testing environment, which is destroyed and re-created after every test run. Any software version upgrades or bug fixes need to be applied only to the template machines. The number of virtual machines associated with any particular template machine is dynamically configurable to provision for optimal use of testing machines.

A method and a system for virtual prototyping are proposed in another American patent application US2010017185 A1 (Bade S. et al., US, 21.01.2010). An integrated design environment (IDE) is disclosed for forming virtual embedded systems, wherein the IDE includes a design language for forming finite state machine models of hardware components that are coupled to simulators of processor cores, preferably instruction set accurate simulators. A software debugger interface permits a software application to be loaded and executed on the virtual embedded system. A virtual test bench may be coupled to the simulation to serve as a human-machine interface.

None of the above inventions solves the problem of the integrated development environment efficiency, although various optimizing methods, deduplication and backuping included, are known from many publications. The invention proposed here is a right solution of this problem.

Invented system automatically prepares an integrated development environment IDE and provides it online within the internal network (102) of an enterprise. To achieve full functionality this integrated development environment IDE must include all the elements necessary for the proper operation of a version of the application VerA (201 a) selected by the user. According to the invention, these elements are: a virtual machine VM (204a) which forms a foundation of the integrated development environment, an operating system OS (601) of Windows NT family in a version of at least 6.1.7600, an installed version VerA of the application (201), and the dependent applications DepA (602).

A virtual machine VM is a software launch environment, controlling all the references that run the program, directly to the hardware or the operating system, and provide support for the software. Executed programs, in particular the operating systems, are completely isolated from the physical machine by the virtual machine VM.

The virtual machine VM which is configured in a way enabling the one of the user-available versions of the application VerA to be installed on it, in particular the virtual machine VM comprising the operating system OS (601) and processed by a mechanism Hyper-V, is called a virtual machine template VMT.

The virtual machines VM forming the integrated development environments IDE (202), virtual machines templates VMT (203) and files comprised in a version of the application VerA (201) available to the user are stored on a deduplication array DA (103) serving as a repository. The principle of operation of the deduplication array DA is based on data deduplication mechanism, as described below.

The deduplication array DA is a physical element of computing infrastructure, consisting of two or more hard disks, co-operating in accordance with the RAID mechanism (Redundant Array of Independent Disks) and with the mechanisms conducting a process of data deduplication. In other words, it is a dedicated, physical storage array that supports data deduplication process.

Deduplication is the process of eliminating redundant data by replacing duplicates with links to the one original data portion. This process can be applied to the elimination of data in the database systems, and virtually in any application or file. However, taking into account the information systems in general, the greatest benefits of deduplication can be obtained using the virtual storage devices.

Deduplication process can be executed in many ways, but each of them is based on the use of two structures: deduplicated data and a table of hashes TH. For each chunk of data sent to the deduplicating system a hash is calculated by dedicated algorithm that assigns tens-byte identifier to the data set. It meets the requirement of identity, based on the fact that for two identical data sets exactly the same hash is returned. If the hash calculated for the new portion of data is not contained in the table of hashes TH, it is added with an indication to the added data. Otherwise, i.e. when the hash is already present in the table of hashes TH, the new data are not stored, but replaced with an indication to the chunk of data which had previously been processed.

The process of deduplication gives the best results, i.e. the highest reduction of space occupied by data in case of the data sets with many similar elements. According to the proposed invention, such data sets are the sets of the virtual machines VM. The operating systems are a common part of particular machines, therefore because of similarities in the software installed on them reproducibility of data is high. Also in case of storage of successive versions of a particular software or application, there is a high reproducibility of data, since a significant part of files in subsequent versions does not change or the changes are small.

Aiming to maximize the effect of reducing the space occupied by data, it is preferred to use the deduplication array DA with applied the deduplication method at a variable block level. In this method, a data unit, for which the hash is generated and its uniqueness is checked, is the block. The block may be of any length. The shorter is the block used, the greater number of copies can be found, and the occupied disk space can be reduced to higher extent. Block-level deduplication uses the fact that a lot of files differ from each other only in a small part. An example is the aforementioned set of files of the virtual machines VM, or files that make up subsequent versions VerA of the same application.

Preparation of the integrated development environment IDE is executed by a virtualization module VIMO (104), an application version repository module VARMO (105) and an installers creation module ICMO (106). They are installed on the servers S (107) and communicate with each other and the deduplication array DA via an internal network INTRANET (102). The whole process is initiated by the user through an installation and updating module IUMO (101), installed on the user's local station LS.

The virtualization module VIMO is a software that enables creation of new virtual machines VM based on the virtual machines templates VMT, placing them in a given location, for example on the specified virtual server VS, the deduplication array DA, etc., management of parameters of created virtual machines VM, for example assigned processor, RAM, storage, peripherals, network interface, etc., analogous to physical machines, performing automatic installation process of a version VerA of the application on a given virtual machine VM, and the overall supervision of the state of all created virtual machines VM, for example boot, restart, etc., analogous to the operating systems.

The application version repository module VARMO is a software that allows to store installers of versions VerA of the application together with additional information such as the software name, version name, version description, any dependent version, version publication date. This software also enables access for the needs of the process of creating and configuring virtual machine VM. For each version VerA of the application it is possible to define requirements for the environment in which it will be installed, including the parameters of the virtual machine VM and used operating system OS.

The installers creation module ICMO is a software creating compact and compressed mechanism having the ability to automatically transfer files of the application version VerA at specified place, download and install the necessary dependent application DepA (602), and setting all necessary parameters, allowing to use version VerA of the application for specific environment (entries in the Windows operating system registry, configuration files, settings of databases, services, etc.).

The creation of the so-called installers of version of the application, or mechanisms automatically performing the process of installing and configuring a particular version of the application for a given environment under the current operating system, is an important step in the process of automatic preparation of the integrated development environments.

The process of creating the installer INST (301) of a particular version VerA of the application begins with downloading (302) by the installers creation module ICMO (106) from the deduplication array DA (103) the files that make up the application version VerA (201 a).

The created installer INST (304a) is sent (303) to a temporary database TDBI (304) of installers of the application versions, where it can be downloaded (305) at any time through the process of adding the installer to a database DBI (306) of installers of the application versions. Calling the process is run on demand of the user administering of the application versions repository module VARMO (105). Adding (307) the installer INST to the database DBI (308) of the application versions installers causes that it becomes available for the process of automatic preparation of the integrated development environments IDE with use of the deduplication arrays DA. As a result, it becomes available for the user who needs to create an environment containing the application version VerA.

Preparing the integrated development environment IDE (202a) containing a specific version VerA of the application (201), starts with the user-dependent selection with use of the installation and updating module IUMO (101), of the desired version from among the other available versions through the version of the application repository module VARMO (105).

The installation and updating module IUMO is a software that allows the user to create automatically the integrated development environment IDE, containing one of the versions VerA of the application available from the list provided by the versions of the application repository module VARMO together with any necessary dependent applications, and optionally to supervise their updating.

A list of versions VerA of the application is delivered (410) to the installation and updating module IUMO through the service that provides the versions of the application installers INST (408), which communicates (409) directly to the database DBI (308) of the application versions installers. Then, information (401) related to the requirements with respect to the virtual machine VM that will be the basis of the environment created for the selected application version VerA, is transmitted to the virtualization module VIMO (106).

The process of creating and configuring the virtual machine VM (402) finds (403) on the deduplication array DA (103) a virtual machine template VMT (203a), that meets the requirements of the selected earlier version VerA of the application and acquires it (404). With the use of the virtual machine template VMT (203a) a new virtual machine VM (204a) having the same parameters which is the basis of the integrated development environment IDE (202a) is created. Information enabling access to the created virtual machine VM, such as the address and name of the virtual machine, or data necessary for authentication and authorization in a virtual machine are forwarded (406) to the process of installing a version VerA of the application on the virtual machine VM (407).

The process of installing version VerA of the application on the virtual machine VM prepared (204a) in the previous step, communicates (501) with the service providing installers INST of version of the application (408). A service acquires (502) from the database DBI (308) of the application versions installers, the proper installers INST of version of the application (304a), dependent applications DepA (602a), and the installation and update module IUMO (101 a). It then passes (503) them to the process of installing a version VerA of the application on the virtual machine VM.

The installer INST of version of the application, together with dependent applications DepA, and installation and update module IUMO are sent (504) to the virtual machine VM (204a) and executed.

Upon completion of installation processes, the virtual machine VM being already a complete, integrated development environment IDE (202a) sends feedback of the actions (505) executed and then is transferred (507) by the virtualization module VIMO (106) to the deduplication array DA (103).

All the data necessary to run the version VerA of the application with access to the integrated development environment IDE, where it has been implemented (address, name of the virtual machine, the data needed for authentication and authorization in a virtual machine VM, address and data related to the authentication and authorization in the installed version VerA of the application), are forwarded (506) to the installation and updating module IUMO (101). That means they are forwarded to the user who started the process to create the environment and who can use them at any time.

An advantageous feature of the claimed system is that the installation and updating module IUMO (101), analogous to the one used by the user to start the process of creating the integrated development environment IDE, is installed on the integrated development environment IDE (102a) along with the application version VerA and dependent applications DepA. This module has access to the version of the application repository module VARMO (105), the same way as its counterpart on the physical machine. Therefore if requested by the user it can install other versions of the same application, or completely different applications, directly on the integrated development environment IDE.

The use of the invention in software producing enterprises shall enable them to shorten and simplify the process of testing and presenting subsequent versions of the application. The invention eliminates repetitive and time consuming stages of recreation of the integrated development environment IDE and manual installation on it all the necessary elements, i.e. the operating system, its upgrades, tested/presented software, i.e. given version of the application, and other applications depending on this software.

The primary benefit of supporting the proposed system by deduplication process is considerable, from a few to dozens times, reducing the amount of space used to store the data. As mentioned above, this is due to storage the virtual machines VM in the system, showing a high similarity of data based in large part on the same operating system OS as well as different versions VerA of an application, where also there is a great similarity of many files that make up the application.

Reduction of storage space also allows for storage of large number of environments, especially those with old versions of the application. This is advantageous for backward compatibility testing or testing behavior in the presence of updated certain components of the environment. For example, there are commonly known cases when the operating system update caused conflicts with certain versions of the software, and then a throwback to a previous version may be necessary. It may also be useful to create many variants of the environment, including specific software and test the operation of a particular version of the application under controlled conditions.

Reducing the amount of space is of course a trade with the expense of extra energy and time that must be devoted to the deduplication process itself. The deduplication process increases the load on the processor, RAM and disks storing the current data. The ratio of finally saved storage space to a drop in efficiency of the infrastructure which operates the process is dependent on the variant of deduplication.

The target deduplication is the deduplication process executed on the data storage device. The advantage of the target deduplication is that it does not involve the processor and memory of the server that processes the source data. This type of solution can be easily integrated with existing enterprise infrastructure. The opposite option is the source deduplication, where any data must be deduplicated before sending them to the data storage device. Here the processor and memory have to be additionally used, while the profit is in lesser load on enterprise network for data transmission.

The approach to the deduplication process also depends on the point at which this process is run. In the method of inline deduplication data is deduplicated immediately after reaching the storage device. In turn, in the method of post-process deduplication data reaching the target device are first stored in the original form, and only then processed and stored in the deduplicated form. The advantage of the first method is less space required on the disks array because of no need to store the data in its original form. The price paid is in slowing down the process, especially when the hashes database, or the table of hashes TH, significantly increases in time, since it must take place immediately, rather than at lower load of the recording device. The second method is the opposite: deduplication occurs at the time when the master device is less busy. It is limited only by the performance of the disks where the original data are stored. Usage of additional disk space for time of storage of the original data is then required.

It follows from the above that for storage of data consisting of the application version VerA, the virtual machine templates VMT and the integrated development environments IDE consisting of the virtual machines VM, the most preferred is to use a dedicated physical device in the form of the deduplication array DA, which makes the target deduplication. Being independent from the rest of the infrastructure the deduplication array DA is a device that has only one main task, i.e. deduplication, as opposed to the servers that perform many tasks required by the virtualization modules VIMO, installers creating modules ICMO, and application versions repository modules VARMO. The deduplication array DA can additionally deduplicate virtually in real time, i.e. perform inline deduplication.

This solution makes possible to use virtual machines VM directly from the deduplication array DA. This is an additional potential inherent to the claimed invention, i.e. the system that creates and provides the integrated development environments IDE, consisting of those virtual machines VM.

Moreover, in this case the process does not require to involve any additional resources, i.e. data deduplicating software or data backup software on servers (107) included in the invention described herein.

It is also preferable that the data stored on the deduplication array DA, which is a part of the company's internal infrastructure, remain at all times under full control of the company. The whole communication is performed through the internal network INTRANET. There is no doubt that both the tested software and the data used for tests or presentations make an important part of the know-how of the company and are subject to special protection. The proposed solution offers full control over the placement of data, both logical placement on the intranet and physical location in the network.

The invention in one embodiment is illustrated in the drawings, wherein:

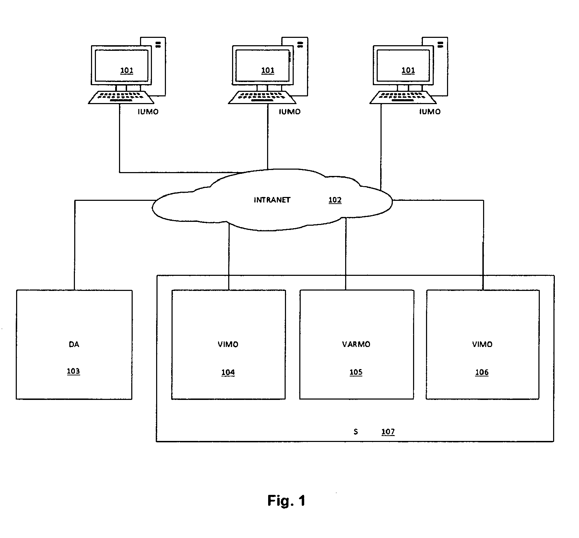

Fig. 1 shows a high-level block diagram of the main elements of the infrastructure required for automatic preparation of the integrated development environments IDE using the deduplication array DA;

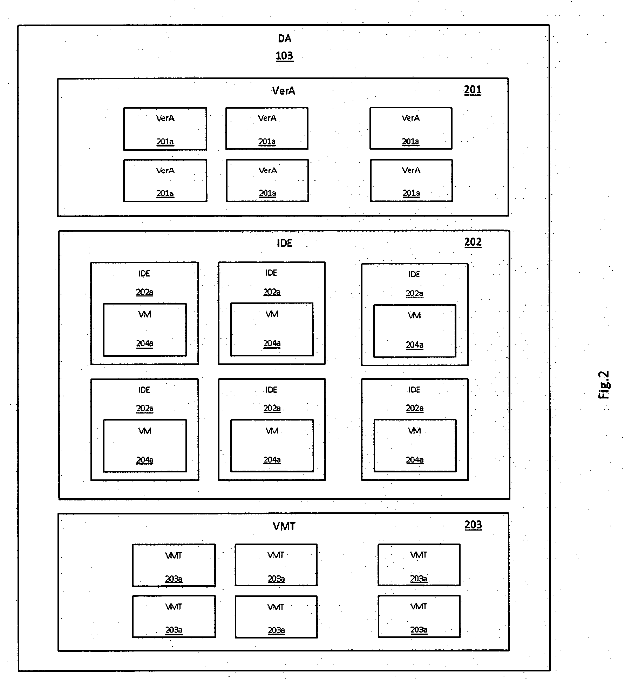

Fig. 2 shows a high-level block diagram of the data stored on the deduplication array DA;

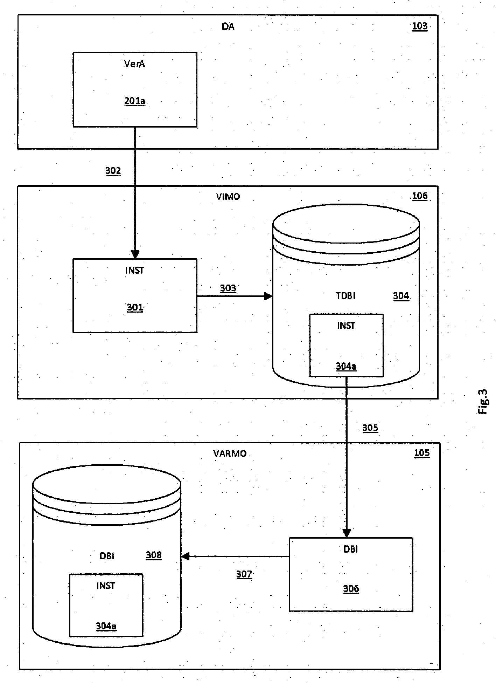

Fig. 3 shows a high-level block diagram of a method of creating exemplary installer INST of version of the application, which is used for automated preparation of the integrated development environments IDE with use of the deduplication array DA;

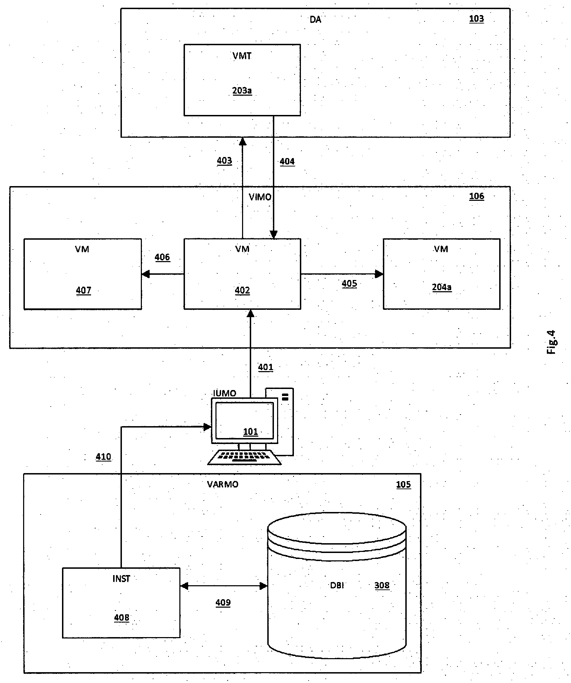

Fig. 4 shows a high-level block diagram of a method of creating and configuring a virtual machine VM, which is the basis of the integrated development environment IDE, placed on the deduplication array DA;

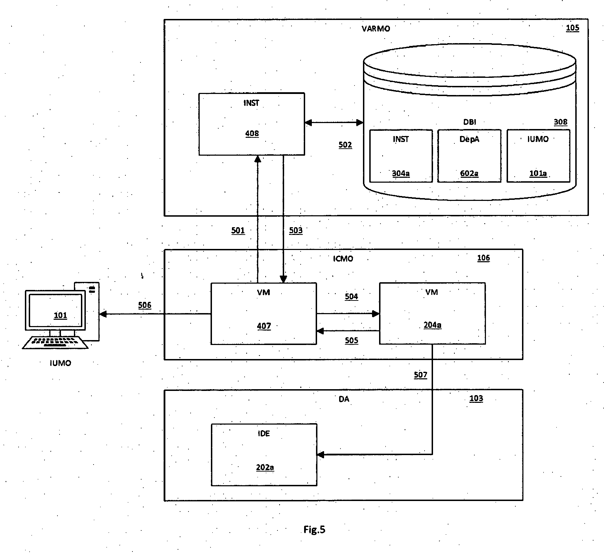

Fig. 5 shows a high-level block diagram of installing an exemplary version VerA of the application on created earlier (Fig. 4) the virtual machine VM placed on the deduplication array DA, which ends the automated preparation of the integrated development environment IDE;

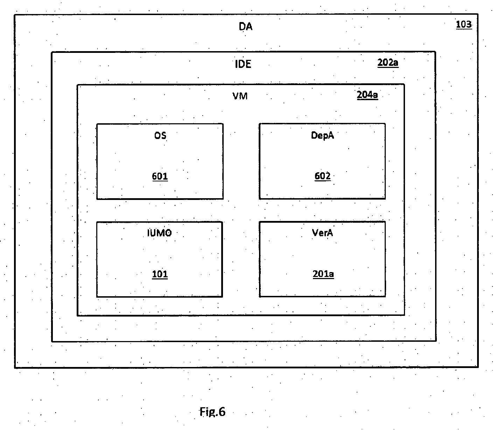

Fig. 6 shows a high-level block diagram of the basic elements forming the integrated development environment IDE, arranged on the deduplication array DA.

In an embodiment of the invention, the system is used to automatically prepare the integrated development environments IDE, containing a fully functional, ready-to-use application X, whose subsequent versions (X₁, X₂, ..., Xₙ) are created by the development enterprise for the financial sector.

Application X is designed for use in the environments that use operating systems of Windows NT family in a version 6.1.7600 or higher, and consists of a number of files, in the order of tens of thousands, which in subsequent versions are modified so that also new files are created. In a situation when the most accurate representation of given configuration is needed because of an error occurred, it is necessary to provide to the persons responsible for the application quality the environments containing both the appropriate version of the application as well as additional software, for example a version of .NET libraries. With regard to productivity of the new versions of the application, and the number of employees in the quality division, it is necessary to have multiple environments while the differences in their content are relatively small. Because it happens that different versions of the same application are sold to different customers in different times, a need appears to create the environments with historical versions of the application for testing purposes, i.e. to reproduce the errors. Another group of users within the enterprise for which the invention is designed consists of the staff responsible for preparing the application to present it to the customer. At their request the operating environments with the latest versions of applications in different variants, including different versions of operating systems and different hardware configurations simulated by the virtual machine must be available and configured.

For this purpose, the hardware network infrastructure within the company is supplemented with the deduplication array DA, for example, Dell DR4100, able to make the target deduplication with the "inline" procedure applied. In this case, all the calculations associated with the deduplication process are performed without involving other infrastructure. Said solution is a disk array consisting of twelve 3.5" disk drives configured as RAID 6. In this disk array data is protected even in the event of failure of two disks which in the case of large amount of data of high value is of particular importance.

Additionally, three modules vital from the point of view of the invention, namely the virtualization module VIMO, version of the application repository module VARMO, and installers creating module ICMO are placed in a dedicated server S, equipped with the operating system OS, namely Windows Server 2008 R2 (NT 6.1.7600) or higher from the family of Windows server operating systems. These modules communicate with each other and the deduplication array DA via internal network INTRANET. Said server operates on this network.

In the exemplary embodiment of the system according to the invention, the installers crating module ICMO is based on Gaudit software by VSoft. However, it can be replaced by third-party software assisting in creation of compact and compressed mechanisms able to automatically transfer files of the application version VerA to the specified location, download and install the necessary dependent software and setting all parameters necessary to use given version of the application in specific environment (entries in the registry of Windows operating system, configuration files, databases settings, services, etc.).

In turn the version of the application repository module VARMO is based on the Kopernit software by VSoft. As before, it can be replaced by third-party software able to store the installers INST of version of the application with additional information such as the software name, version name, version description, optional dependent version, version publication date, set of requirements for the environment, and to make them available for the process of creating and configuring virtual machine VM.

Another virtualization module VIMO is based on Archimit software by VSoft. It also can be replaced by third-party software for creating new virtual machines VM based on templates VMT, placing them at a predetermined location, i.e. on the specified virtual server, deduplication array, etc., managing or changing parameters of created virtual machines VM (assigned processor, memory, storage, peripherals, network interface, and the like analogous to the physical machines), performing a process of automatic installation of version VerA of the application on a given virtual machine VM, and comprehensive monitoring of the state of all created virtual machines VM (activities such as booting, restart, etc. analogous to operating systems).

Every person responsible for preparation of the environment has the installation and updating module IUMO installed on local station LS, which may be any machine controlled by an operating system of family Windows NT version 6.1.7600 or higher. The module is configured to co-operate with virtualization module VIMO and application version repository module VARMO.

The last installation and updating module IUMO is based on the client part of the mentioned above Kopernit software by VSoft. Also in this case, it can be replaced by third-party software that allows the user to create automatically the integrated development environment IDE, containing one of the available from a list provided by the application version repository module VARMO the application version VerA together with all necessary dependent applications DepA, and allowing the user to supervise their state.

With so prepared infrastructure, it is possible for claimed system to run the process of automatic preparation of the integrated development environments IDE, which consists in the here described case of the following steps:
1. A set of programmer-generated files making the version VerA of the application is placed on the deduplication array DA. This is an iterative process, and subsequent versions of the application, i.e. additional sets of files that make up the application are stored on the deduplication array DA.
2. The installers creating module ICMO creates an installer INST for each of the stored versions VerA of the application, which is a mechanism allowing the said application version to be automatically installed in the indicated location. The process of launching the installer INST can be started automatically or manually. The resulting installer is then automatically or manually added to the database of installers DBI of the versions of the application repository module VARMO. When adding a new version VerA of the application its name, version number, version description, any dependent version and the version publication or creation date shall be specified. Minimum requirements to be met by the environment on which the version of the application will be installed, shall be determined for each version.
3. The user preparing the environment containing the application version of interest runs an installation and updating module IUMO installed on local station LS for testing, reproducing the errors, making a presentation to the customer, and the like. Then he indicates to what application and what version he needs to create the integrated development environment IDE. The list comes from the version of the application repository module VARMO.
4. The installation and updating module IUMO downloads the appropriate installer INST from the versions of the application repository module VARMO and sends it to the virtualization module VIMO. In the same way shall be collected and sent all necessary additional dependent applications DepA and the installation and updating module IUMO that will allow updating the application versions VerA directly on given environment.
5. The virtualization module VIMO finds suitable virtual machine template VMT which is stored on the deduplication array DA. The template is selected by comparing parameters required by the version VerA of the application, as defined in the version of the application repository module VARMO, and by description of the virtual machine template VMT stored on the deduplication array DA. Hence, it comes, that given version requires for example an environment consisting of Windows 7 SP1, including also a database SQL 2010, and the machine itself should have at least 4 GB of memory, 2 cores 2 GHz, the network interface and 10GB of virtual hard disk.
6. On the basis of the virtual machine template VMT the virtualization module VIMO creates a new virtual machine VM and installs on it a version VerA of the application chosen by the user. Optionally all dependent applications DepA and the installation and updating module IUMO which were transmitted in the previous step are additionally installed.
7. The result of the process carried out by the virtualization module VIMO is a ready-to-use integrated development environment IDE being the selected virtual machine VM together with installed version VerA of the application, dependent applications DepA, and the installation and updating module IUMO. The environment created in this way is transferred automatically by the virtualization module VIMO on the deduplication array DA. Information about the location of the environment storage, logging procedure, and the like are transferred to the user who started the process.

Because of the similarity of each environment stored on the deduplication array it is possible to obtain from a few to dozens times reduction in storage space required to store the virtual machines, if compared to the system with the ordinary disk array.

## Claims

1. A system for automatic preparation of the integrated development environments, comprising a computer network, **characterized in that** the integrated development environment IDE (202) comprises a virtual machine VM (204a) which together with an operating system OS (601) makes a virtual machine template VMT (203), an installed version VerA of the application (201), and optional dependent applications DepA (602), and **in that** the virtual machine VM (204a), the virtual machine templates VMT (203) and the files comprised in the version of the application VerA (201) available to the user are stored on a deduplication array DA (103) being a repository.

2. The system according to claim 1, **characterized in that** the deduplication array DA (103) consists of two or more hard disks, co-operating in accordance with the RAID mechanism.

3. The system according to claim 1 or 2, **characterized in that** the integrated development environment IDE (202) is executed by a virtualization module VIMO (104), an application version repository module VARMO (105), and an installers creation module ICMO (106) which are installed on the servers S (107) and communicate with each other and the deduplication array DA (103) via the computer network, and **in that** the process of preparation of the integrated development environment IDE (202) is initiated by the user through an installation and updating module IUMO (101), installed on the user's local station LS.

4. The system according to claim 3, **characterized in that** an operation of downloading (302) the files that make up the application version VerA (201 a) by the installers creation module ICMO (106) from the deduplication array DA (103) begins the process of creating an installer INST (301) of a particular version VerA of the application.

5. The system according to claim 4, **characterized in that** the created installer INST (304a) is sent (303) to a temporary database TDBI (304) of installers of the application versions, where it can be downloaded (305) at any time through a process of adding the installer to a database DBI (306) of installers of the application versions, and **in that** calling the process is run on demand of the user administering of the application versions repository module VARMO (105).

6. The system according to claim 5, **characterized in that** a list of versions VerA of the application is delivered (410) to the installation and updating module IUMO through the service that provides the versions of the application installers INST (408), which communicates (409) directly to the database DBI (308) of the application versions installers, wherein information (401) related to the requirements with respect to the virtual machine VM being the basis of the environment created for the selected application version VerA, is transmitted to the virtualization module VIMO (106).

7. The system according to claims 6, **characterized in that** the process of creating and configuring the virtual machine VM (402) finds (403) on the deduplication array DA (103) a virtual machine template VMT (203a), that meets the requirements of the selected earlier version VerA of the application and acquires it (404), and with the use of the virtual machine template VMT (203a) a new virtual machine VM (204a) having the same parameters is created.

8. The system according to claims 7, **characterized in that** the process of installing version VerA of the application on the virtual machine VM (204a) communicates (501) with the service providing installers INST of version of the application (408), and a service acquires (502) from the database DBI (308) of the application versions installers the proper installers INST of version of the application (304a), dependent applications DepA (602a), and the installation and update module IUMO (101 a), and then passes (503) them to the process of installing a version VerA of the application on the virtual machine VM.

9. The system according to claim 8, **characterized in that** the installer INST of version of the application, together with dependent applications DepA, and installation and update module IUMO are sent (504) to the virtual machine VM (204a) and executed, and upon completion of installation processes, the virtual machine VM sends feedback of the actions (505) executed and then is transferred (507) by the virtualization module VIMO (106) to the deduplication array DA (103).

10. The system according to any of claims 1 to 9, **characterized in that** the computer network is an internal network INTRANET (102).
